# EUROPEAN PATENT APPLICATION

(11) **EP 4 380 209 A1**
(43) Date of publication of application: **05.06.2024**
(21) Application number: 21951818.0
(22) Date of filing: 28.07.2021
(51) Int. Cl.: H04W 8/18, H04W 24/08

(54) **NETWORK NODE AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SAWADA, Masahiro, Tokyo 100-6150 (JP); SAMA, Malla Reddy, 80687 Munich (DE)
(74) Representative: Hoffmann Eitle
(86) International application number: PCT/JP2021/027887
(87) International publication number: WO 2023/007611

(57) **Abstract**

A network node according to an aspect of the present disclosure is present in a core network where a data hub is placed in a user plane, and includes: a control section that recognizes that a session of a terminal is for the data hub; and a transmission section that transmits information to a user plane portion of an aggregation node in a serving base station of the terminal, the information indicating that data transmitted from the terminal in the session is transmitted from the user plane portion to the data hub directly connected to the user plane portion.

## Description

### Technical Field

The present disclosure relates to a network node and a communication method.

### Background Art

As requirements in New Radio (NR: also referred to as "5G"), which is a successor system to Long Term Evolution (LTE), studies have been carried out on technologies realizing increased system capacity, a high data transmission rate, low latency, simultaneous connection of a large number of terminals, low cost, power saving, etc.

In an architecture of a core network of such 5G (also referred to as 5G core network (5GC)), a control plane (C-plane) responsible for network control and a user plane (U-plane) responsible for user data processing are separated (for example, Non Patent Literatures (hereinafter, referred to as NPLs) 1 to 3).

### Citation List

### Non Patent Literature

NPL 1
   3GPP TS 23.288 V17.1.0 (2021-06)
NPL 2
   3GPP TS 23.501 V17.1.1 (2021-06)
NPL 3
   3GPP TS 23.503 V17.1.0 (2021-06)
NPL 4

### Summary of Invention

A use case of 5G-Advanced/6G requires a technique for securely transmitting and aggregating various user data on the U-plane from terminals in a 5G system (5GS), for example, to train a deep neural network (DNN) used for artificial intelligence (AI), for example.

An aspect of the present disclosure facilitates providing a network node and a communication method each capable of securely transmitting and aggregating user data from a terminal.

A network node according to an aspect of the present disclosure is present in a core network where a data hub is placed in a user plane, and includes: a control section that recognizes that a session of a terminal is for the data hub; and a transmission section that transmits information to a user plane portion of an aggregation node in a serving base station of the terminal, the information indicating that data transmitted from the terminal in the session is transmitted from the user plane portion to the data hub directly connected to the user plane portion.

A communication method according to an aspect of the present disclosure is performed by a network node in a core network where a data hub is placed in a user plane, and includes: recognizing that a session of a terminal is for the data hub; and transmitting information to a user plane portion of an aggregation node in a serving base station of the terminal, the information indicating that data transmitted from the terminal in the session is transmitted from the user plane portion to the data hub directly connected to the user plane portion.

### Brief Description of Drawings

FIG. 1 illustrates an example of a communication system according to an embodiment of the present disclosure;
FIG. 2 illustrates exemplary connection to a data hub and UL data collection using PDU session establishment according to an embodiment of the present disclosure;
FIG. 3 illustrates other exemplary connection to the data hub and UL data collection using PDU session establishment according to an embodiment of the present disclosure;
FIG. 4 illustrates exemplary connection to the data hub and UL data collection using a control plane service request and PDU session establishment according to an embodiment of the present disclosure;
FIG. 5 illustrates other exemplary connection to the data hub and UL data collection using the control plane service request and PDU session establishment according to an embodiment of the present disclosure;
FIG. 6 illustrates an exemplary functional configuration of a terminal according to an embodiment of the present disclosure;
FIG. 7 illustrates an exemplary functional configuration of a base station according to an embodiment of the present disclosure;
FIG. 8 illustrates an exemplary functional configuration of an access mobility management apparatus according to an embodiment of the present disclosure;
FIG. 9 illustrates an exemplary functional configuration of a session management apparatus according to an embodiment of the present disclosure;
FIG. 10 illustrates an exemplary functional configuration of a user plane apparatus according to an embodiment of the present disclosure; and
FIG. 11 illustrates an exemplary hardware configuration of the terminal, the base station, the access mobility management apparatus, the session management apparatus, or the user plane apparatus according to an embodiment of the present disclosure.

### Description of Embodiments

Hereinafter, an embodiment of the present disclosure will be described with reference to the accompanying drawings. Note that the embodiment to be described below is merely an example, and an embodiment to which the present disclosure is applied is not limited to the embodiment below.

The existing technology may be appropriately used for an operation of a radio communication system according to an embodiment of the present disclosure. The existing technology includes but not limited to existing LTE or existing 5G, for example.

The names of nodes, signals, etc. in the following description are from the current 5G specification (or LTE specification), but different names may be used for nodes, signals, etc. having the same functions as those in the following description.

For example, in an embodiment of the present disclosure, the terms used in the existing LTE are sometimes used, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH). The terms in NR corresponding to the above terms are NR-SS, NR-PSS, NR-SSS, NR-PBCH, NR-PRACH, NR-PDCCH, NR-PDSCH, NR-PUCCH, and NR-PUSCH. Note that "NR-" is not always necessary for a signal used in NR.

### (Exemplary System Configuration)

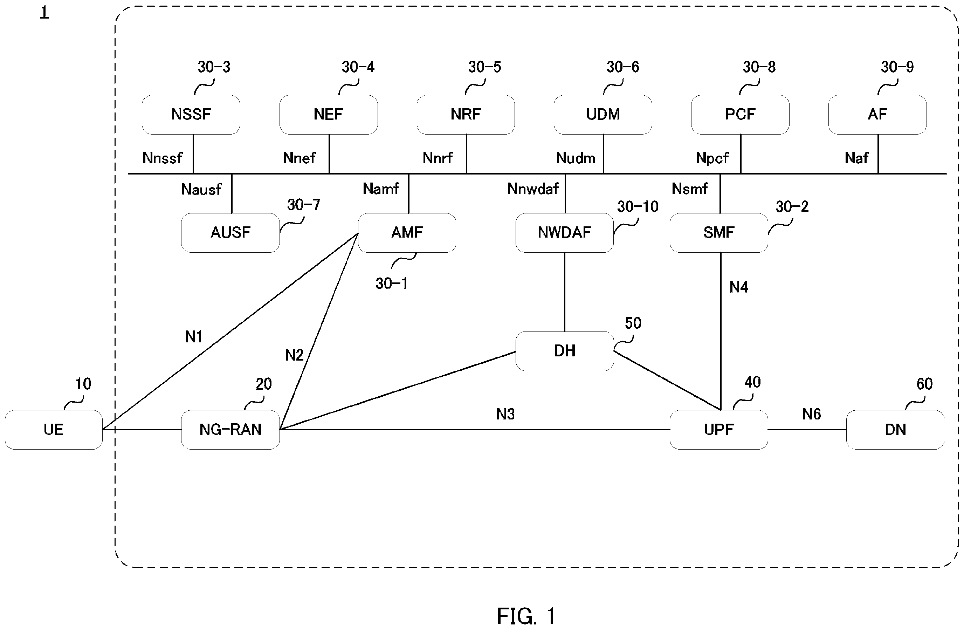

FIG. 1 illustrates an example of communication system 1 according to an embodiment of the present disclosure. Communication system 1 is composed of, for example, user equipment (UE; may be referred to as a (user) terminal) 10, and a plurality of network nodes 20, 30-1 to 30-10 (maybe referred to as network functions (NFs)), 40, and 50. Although a single network node supports a single function in the following description, a single network node may implement a plurality of functions and a plurality of network nodes may implement a single function. In addition, the "connection" described below may be logical connection or physical connection.

Next generation-radio access network (NG-RAN) 20 is a network node having a radio access function, and may be, for example, next generation node B (gNB or may be referred to as a base station) 20. NG-RAN 20 is connected to UE 10, access and mobility management function (AMF) 30-1, and user plane function (UPF) 40. NG-RAN 20 is also connected to data hub (DH) 50 in some cases, as illustrated in FIG. 1.

AMF 30-1 is a network node having functions such as RAN interface termination, non-access stratum (NAS) termination, registration management, connection management, reachability management, and mobility management. AMF 30-1 is connected to UE 10, NG-RAN 20, session management function (SMF) 30-2, network slice selection function (NSSF) 30-3, network exposure function (NEF) 30-4, network repository function (NRF) 30-5, unified data management (UDM) 30-6, authentication server function (AUSF) 30-7, policy control function (PCF) 30-8, application function (AF) 30-9, and network data analytics function (NWDAF) 30-10. Note that AMF 30-1 may also be referred to as an access mobility management apparatus.

AMF 30-1, SMF 30-2, NSSF 30-3, NEF 30-4, NRF 30-5, UDM 30-6, AUSF 30-7, PCF 30-8, AF 30-9, and NWDAF 30-10 are network nodes connected to each other via interfaces based on the respective services: Namf, Nsmf, Nnssf, Nnef, Nnrf, Nudm, Nausf, Npcf, Naf, and Nnwdaf.

SMF 30-2 is a network node having functions such as session management, UE Internet protocol (IP) address allocation and management, a dynamic host configuration protocol (DHCP) function, an address resolution protocol (ARP) proxy, and a roaming function. Note that SMF 30-2 may also be referred to as a session management apparatus.

NSSF 30-3 is a network node having functions such as network slice selection for UE to connect, determination of allowed network slice selection assistance information (NSSAI), determination of configured NSSAI, and determination of an AMF set for UE to connect.

NEF 30-4 is a network node having a function of indicating a capability and an event to another NF.

NRF 30-5 is a network node having a function of finding an NF instance to provide a service.

UDM 30-6 is a network node managing subscriber data and authentication data. UDM 30-6 is connected to a user data repository (UDR) that holds the data.

AUSF 30-7 is a network node authenticating a subscriber/UE 10 against the subscriber data held in the UDR.

PCF 30-8 is a network node having a function of controlling a network policy.

AF 30-9 is a network node having a function of controlling an application server.

NWDAF 30-10 is a network node collecting and analyzing data acquired by the network to provide the analysis result.

UPF 40 is a network node having functions such as an external protocol data unit (PDU) session point interconnecting to NG-RAN 20, DH 50, and data network (DN) 60, packet routing and forwarding, and quality of service (QoS) handling for the user plane, and transmits and receives user data. Note that UPF 40 may also be referred to as a user plane apparatus.

For example, a certain UPF 40 and DH 50 may configure a single network slice. In addition, another UPF 40 and DN 60 may configure another network slice, for example. In the radio communication network according to an embodiment of the present disclosure, a plurality of network slices are configured. Note that a single UPF 40 may operate a single network slice, or a single UPF 40 may operate a plurality of network slices.

Further, UPF 40 is physically, for example, one or more computers (servers, etc.). A plurality of resources obtained by logically integrating/dividing hardware resources (CPU, memory, hard disk, network interface, etc.) of the computer can be regarded as a resource pool, and UPF 40 can use each resource in the resource pool as a network slice. The operation of the network slice by UPF 40 is, for example, to manage the association between the network slice and the resource, to start and stop the resource, to monitor the operation status of the resource, and the like.

DH 50 is a network node aggregating various user data on the U-plane from UE 10, i.e., a (general-purpose) data hub for user data. DH 50 is placed in the U-plane of 5GC and is in a relationship parallel to N3 illustrated in FIG. 1. That is, DH 50 may be placed between NG-RAN 20 and UPF 40 so that N3 (user plane interface between 5GC and NG-RAN 20) connects NG-RAN 20 and UPF 40. As illustrated in FIG. 1, DH 50 is connected to a specific UPF 40 via an internal interface ("embedded" to be described later) in the specific UPF 40 sometimes, and is connected to a next generation node B-central unit-user plane (gNB-CU-UP) in NG-RAN 20 (may also be referred to as a U-plane portion of an aggregation node in a base station) other times. Note that DH 50 may also be referred to as a data aggregation and distribution intermediary apparatus, or the like.

As described above, a technique for securely transmitting and aggregating user data from a terminal in 5GS has been required. Here, in a case where a data hub for user data is introduced to N6 (between UPF 40 and DN 60) in 5GS, communication between UPF 40 and the data hub is not necessarily secure. This is because neither integrity protection nor encryption is applied to data passing through N6 according to the current standard specification. From this perspective, the data hub for user data may be placed between NG-RAN 20 and UPF 40.

In the case of introducing a data hub for user data placed in 5GS as described above, more secure transmission and aggregation of user data are realized by connecting to the data hub via a network node close to a network edge.

In the following, an embodiment of the present disclosure will be described in detail with reference to Example 1 to Example 4 for collecting user data by connecting to a data hub via a network node close to a network edge.

### (Example 1)

Example 1 is an example where user data is collected by connecting to a data hub from the first node of a U-plane of 5GS when a PDU session is established in a conventional manner. The first node is a gNB-CU-UP in this example.

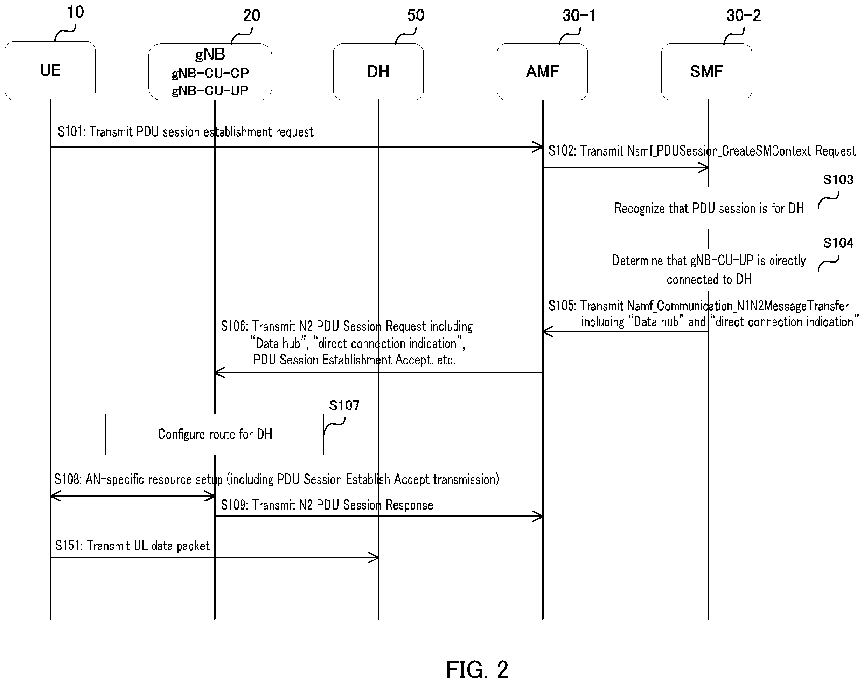

FIG. 2 illustrates exemplary connection to a data hub and uplink (UL) data collection using PDU session establishment according to an embodiment of the present disclosure. The following procedure may be at least partly based on the PDU session establishing procedure described in Section 4.3.2 of NPL 4.

In step S101, UE 10 configures a value for identifying a network slice to be used for data collection in DH 50 and a value for identifying DH 50 to single-network slice selection assistance information (S-NSSAI, which is exemplary slice identification information) and a data network name (DNN, which is exemplary data network identification information) respectively, and transmits a PDU session establishment request including such an S-NSSAI value, DNN value, etc. to AMF 30-1 via gNB 20.

In step S102, AMF 30-1 transmits, to SMF 30-2, such an S-NSSAI value and DNN value, and user location information (ULI) received from gNB 20 using an Nsmf_PDUSession_CreateSMContext Request.

In step S103, SMF 30-2 recognizes that the PDU session is for DH 50 based on at least one of the received S-NSSAI value and DNN value, i.e., based on at least one of the received S-NSSAI value being a value for identifying a network slice to be used for data collection in DH 50 and the received DNN value being a value for identifying DH 50.

In step S104, SMF 30-2 determines that the gNB-CU-UP in gNB 20 that is a serving gNB of UE 10 is directly connected to DH 50 based on the received ULI (i.e., UE position information indicated by cell information) and preconfigured information including node connection information (to be more specific, information indicating a gNB-CU-UP directly connected to the data hub) etc.

In step S105, SMF 30-2 transmits, to AMF30-1, Namf_Communication_N1N2MessageTransfer including "Data hub", which is a network instance value, and a "direct connection indication" as additional information, without selecting or configuring a UPF.

In step S106, AMF 30-1 transmits, to a next generation node B-central unit-control plane (gNB-CU-CP) in gNB 20 (may also be referred to as a C-plane portion of an aggregation node in a base station), an N2 PDU Session Request including the network instance value "Data hub", the additional information "direct connection indication", a PDU Session Establishment Accept, and the like. The gNB-CU-CP transmits the network instance value "Data hub", the additional information "direct connection indication" to the gNB-CU-UP in gNB 20. The network instance value "Data hub" indicates that a data hub is used as a destination of user data. The additional information "direct connection indication" indicates an indication that gNB-CU-UP in gNB 20 is directly connected. Thus, the network instance value "Data hub" and the additional information "direct connection indication" mean an indication (information) that the gNB-CU-UP is directly connected to a data hub and transmits a UL data packet transmitted from UE 10 from the gNB-CU-UP to the data hub.

In step S107, the gNB-CU-UP in gNB 20 configures a route for transmitting the UL data packet transmitted from UE 10 for DH 50 indicated by the preconfigured information including the node connection information (to be more specific, information indicating DH 50 to which the gNB-CU-UP is directly connected) etc. based on the received network instance value "Data hub" and additional information "direct connection indication".

In step S108, the PDU Session Establishment Accept is transmitted and received between UE 10 and gNB 20 in an AN-specific resource setup, and in step S109, gNB 20 transmits a N2 PDU Session Response to AMF 30-1.

When the PDU session is established in this manner, in step S151, the UL data packet transmitted from UE 10 to gNB 20 is inputted from the gNB-CU-UP in gNB 20 to DH 50 based on the configuration of the PDU session. As described above, the UL data from UE 10 is collected in DH 50 through the above-mentioned signaling and configuration.

### (Example 2)

Example 2 is an example where user data is collected by connecting to a data hub from the first node of a U-plane of 5GS when a PDU session is established in a conventional manner. The first node is a UPF in this example.

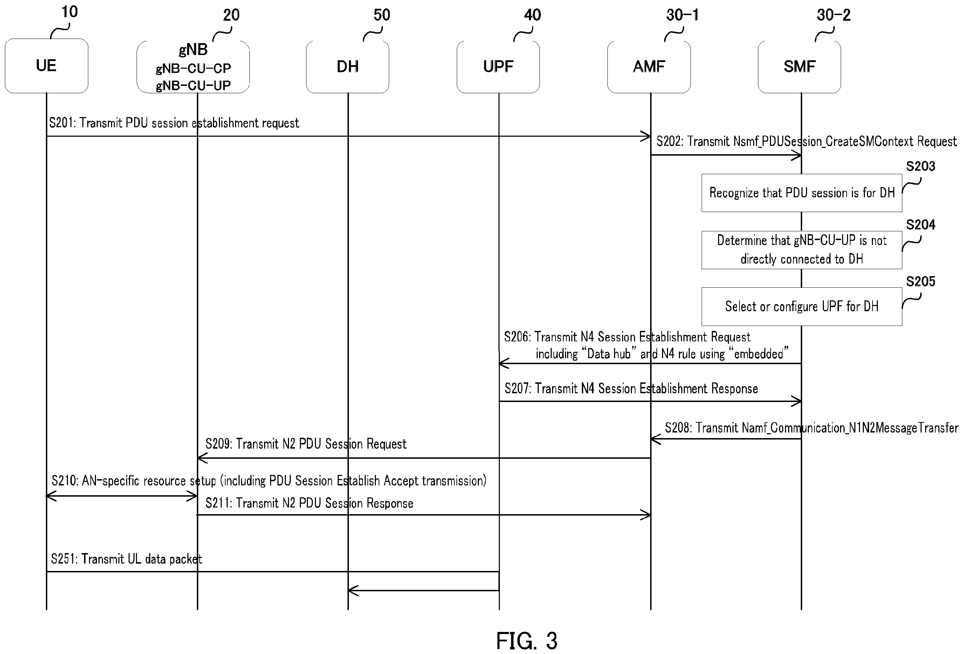

FIG. 3 illustrates other exemplary connection to a data hub and UL data collection using PDU session establishment according to an embodiment of the present disclosure. The following procedure may be at least partly based on the PDU session establishing procedure described in Section 4.3.2 of NPL 4.

In step S201, UE 10 configures a value for identifying a network slice to be used for data collection in DH 50 and a value for identifying DH 50 to the S-NSSAI and DNN respectively, and transmits a PDU session establishment request including such an S-NSSAI value, DNN value, etc. to AMF 30-1 via gNB 20.

In step S202, AMF 30-1 transmits, to SMF 30-2, such an S-NSSAI value and DNN value, and the ULI received from gNB 20 using the Nsmf_PDUSession_CreateSMContext Request.

In step S203, SMF 30-2 recognizes that the PDU session is for DH 50 based on at least one of the received S-NSSAI value and DNN value.

In step S204, SMF 30-2 determines that the gNB-CU-UP in gNB 20 that is a serving gNB of UE 10 is not directly connected to DH 50 based on the received ULI (i.e., UE position information indicated by cell information) and preconfigured information including node connection information (to be more specific, information indicating a gNB-CU-UP directly connected to the data hub) etc.

In step S205, SMF 30-2 selects or configures UPF 40 to be used for data collection in DH 50, based on at least the received S-NSSAI value.

In step S206, SMF 30-2 transmits, to UPF 40, an N4 Session Establishment Request including the network instance value "Data hub" and an N4 rule using an internal interface value "embedded" that is characterized by no outer header being added. As described above, the network instance value "Data hub" indicates that a data hub is used as a destination of user data. The N4 rule using the internal interface value "embedded" indicates that a UL data packet is transmitted to DH 50 via the interface "embedded".

In step S207, UPF 40 transmits an N4 Session Establishment Response to SMF 30-2.

In step S208, SMF 30-2 transmits, to AMF30-1, Namf_Communication_N1N2MessageTransfer including a PDU Session Establishment Accept and the like.

In step S209, AMF 30-1 transmits, to gNB 20, an N2 PDU Session Request including the PDU Session Establishment Accept and the like.

In step S210, the PDU Session Establish Accept is transmitted and received between UE 10 and gNB 20 in the AN-specific resource setup, and in step S211, gNB 20 transmits an N2 PDU Session Response to AMF 30-1.

When the PDU session is established in this manner, in step S251, the UL data packet transmitted from UE 10 is inputted to UPF 40 via gNB 20 and inputted to DH 50 from the interface "embedded" in UPF 40, based on the configuration of the PDU session. As described above, the UL user data transmitted from UE 10 is collected in DH 50 through the above-mentioned signaling and configuration.

### (Example 3)

Example 3 is an example where user data is collected by entering a U-plane from the first node of a C-plane of 5GS and connecting to a data hub in a case of cellular Internet of things (CIoT). The first node is a gNB-CU-UP in this example.

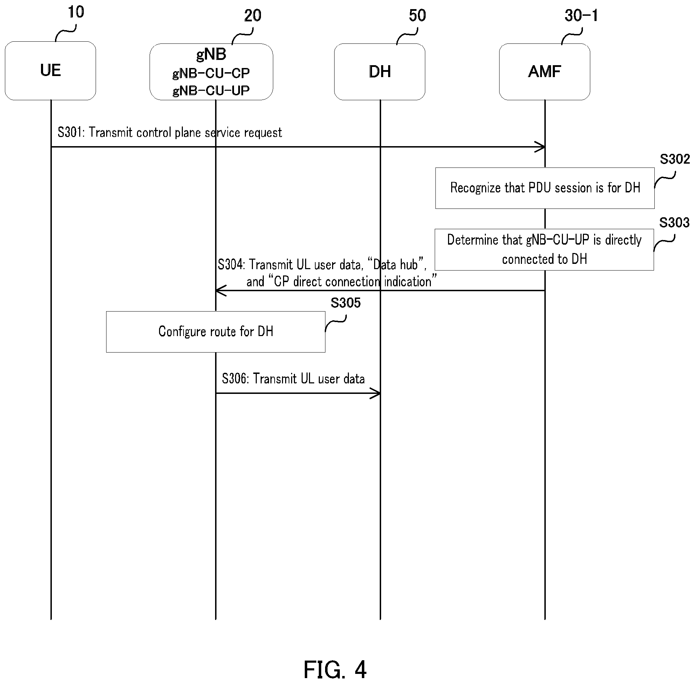

FIG. 4 illustrates exemplary connection to a data hub and UL data collection using a control plane service request and PDU session establishment according to an embodiment of the present disclosure. The control plane service request is a message transmitted including user data in NAS signaling, and does not include the S-NSSAI and DNN. The control plane service request may be at least partly based on the procedure described in Section 4.24.1 of NPL 4, for example.

In step S301, UE 10 configures a value indicating that the PDU session is for DH 50 to the PDU session ID (exemplary session identification information), and uses the control plane service request to transmit the PDU session ID value and UL user data to AMF 30-1 via gNB 20, according to step 1 of the procedure described in Section 4.24.1 of NPL 4.

In step S302, AMF 30-1 recognizes that the PDU session is for DH 50 based on the received PDU session ID value, i.e., based on the received PDU session ID value being a value indicating that the PDU session is for DH 50.

In step S303, AMF 30-1 determines that the gNB-CU-UP in gNB 20 that is a serving gNB of UE 10 is directly connected to DH 50 based on the ULI (i.e., UE position information indicated by cell information) received from gNB 20 and preconfigured information including node connection information (to be more specific, information indicating a gNB-CU-UP directly connected to the data hub) etc.

In step S304, AMF 30-1 transmits, to the gNB-CU-UP in gNB 20 via the gNB-CU-CP in gNB 20, the UL user data after decryption, the network instance value" Data hub", and a "CP direct connection indication" as additional information. As in the above, the network instance value "Data hub" indicates that a data hub is used as a destination of user data. The additional information "CP direct connection indication" indicates an indication that gNB-CU-UP in gNB 20 is directly connected for the UL user data transmitted on the C-plane. Thus, the network instance value "Data hub" and the additional information "CP direct connection indication" mean an indication (information) that the gNB-CU-UP is directly connected to a data hub and transmits the UL user data transmitted from UE 10 on the C-plane from the gNB-CU-UP to the data hub.

In step S305, the gNB-CU-UP in gNB 20 configures a route for transmitting the UL user data transmitted from UE 10 for DH 50 indicated by the preconfigured information including the node connection information (to be more specific, information indicating DH 50 to which the gNB-CU-UP is directly connected) etc. based on the received network instance value "Data hub" and additional information "CP direct connection indication".

In step S306, the gNB-CU-UP in gNB 20 transmits the UL user data to DH 50 based on the control plane service request and the configuration of the PDU session. As described above, the UL user data transmitted from UE 10 is collected in DH 50 through the above-mentioned signaling and configuration.

### (Example 4)

Example 4 is an example where user data is collected by connecting to a data hub from the SMF via the UPF in a case of CIoT.

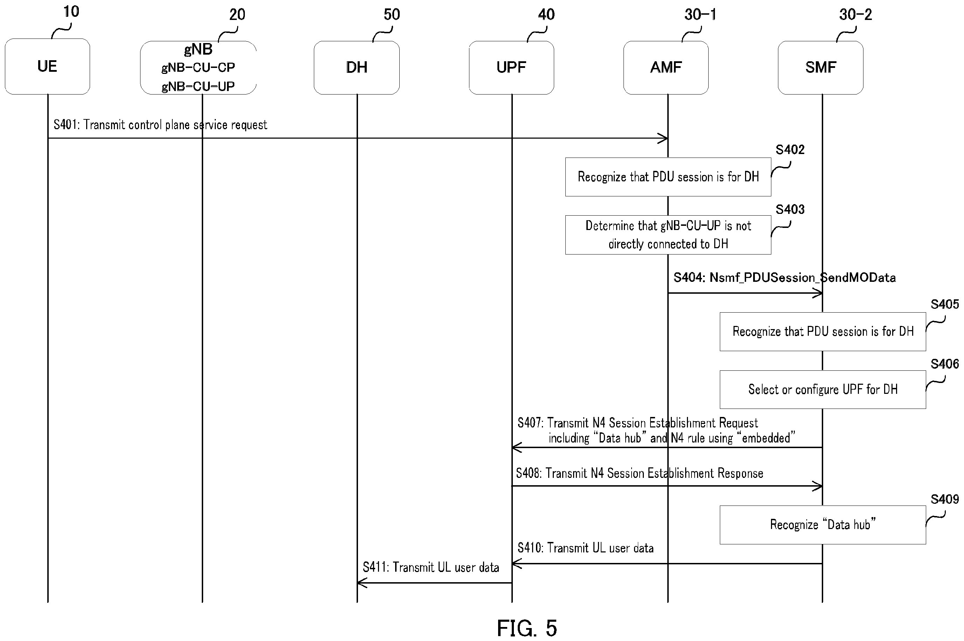

FIG. 5 illustrates other exemplary connection to a data hub and UL data collection using a control plane service request and PDU session establishment according to an embodiment of the present disclosure. The control plane service request is a message transmitted including user data in NAS signaling, and does not include the S-NSSAI and DNN. The control plane service request may be at least partly based on the procedure described in Section 4.24.1 of NPL 4, for example.

In step S401, UE 10 configures a value indicating that the PDU session is for DH 50 to the PDU session ID, and uses the control plane service request to transmit the PDU session ID value and UL user data to AMF 30-1 via gNB 20, according to step 1 of the procedure described in Section 4.24.1 of NPL 4.

In step S402, AMF 30-1 recognizes that the PDU session is for DH 50 based on the received PDU session ID value.

In step S403, AMF 30-1 determines that the gNB-CU-UP in gNB 20 that is a serving gNB of UE 10 is not directly connected to DH 50 based on the ULI (i.e., UE position information indicated by cell information) received from gNB 20 and preconfigured information including node connection information (to be more specific, information indicating a gNB-CU-UP directly connected to the data hub) etc.

In step S404, AMF 30-1 transmits the PDU session ID value and UL user data to SMF 30-2 by proceeding the procedure described in Section 4.24.1 of NPL 4 and calling Nsmf_PDUSession_SendMOData service operation.

In step S405, SMF 30-2 recognizes that the PDU session is for DH 50 based on the received PDU session ID value.

In step S406, SMF 30-2 selects or configures UPF 40 to be used for data collection in DH 50 based on the received PDU session ID value.

In step S407, SMF 30-2 transmits, to UPF 40, an N4 Session Establishment Request including the network instance value "Data hub" and the N4 rule using the internal interface value "embedded" that is characterized by no outer header being added. As described above, the network instance value "Data hub" indicates that a data hub is used as a destination of user data. The N4 rule using the internal interface value "embedded" indicates that UL user data is transmitted to DH 50 via the interface "embedded".

In step S408, UPF 40 transmits an N4 Session Establishment Response to SMF 30-2.

In step S409, SMF 30-2 itself recognizes the network instance value "Data hub". As described above, the network instance value "Data hub" indicates that a data hub is used as a destination of user data.

In step S410, SMF 30-2 transmits the UL user data to UPF 40 on the configured general packet radio service (GPRS) tunneling protocol for user plane (GTP-U) path.

In step S411, the UL user data is inputted to DH 50 from the interface "embedded" in UPF 40 based on the control plane service request and the configuration of the PDU session. As described above, the UL user data transmitted from UE 10 is collected in DH 50 through the above-mentioned signaling and configuration.

Note that the names of information indicated between network nodes described in Example 1 to Example 4, such as the network instance value "Data hub" and the additional information "direct connection indication", are merely examples and can be changed as appropriate.

### (Apparatus Configuration)

Next, descriptions will be given of exemplary functional configurations of terminal 10, base station 20, access mobility management apparatus 30-1, session management apparatus 30-2, and user plane apparatus 40, which perform the processing and operations described above. Although terminal 10, base station 20, access mobility management apparatus 30-1, session management apparatus 30-2, and user plane apparatus 40 include the functions described in the above examples, terminal 10, base station 20, access mobility management apparatus 30-1, session management apparatus 30-2, and user plane apparatus 40 may include only some of the functions described in the above examples.

### <Terminal 10>

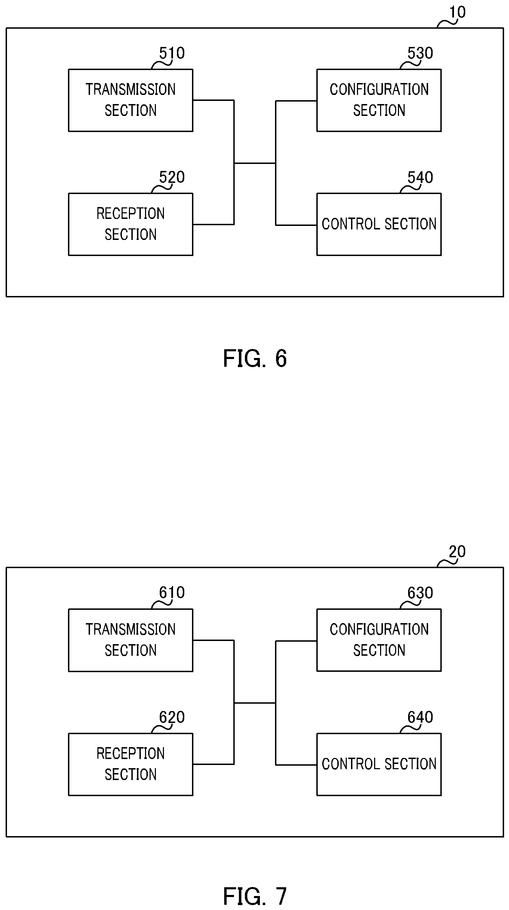

FIG. 6 illustrates an exemplary functional configuration of terminal 10 according to an embodiment of the present disclosure. As illustrated in FIG. 6, terminal 10 includes transmission section 510, reception section 520, configuration section 530, and control section 540. The functional configuration illustrated in FIG. 6 is merely an example. Any names may be used for the function categories and function sections as long as they are capable of performing an operation according to an embodiment of the present disclosure.

Transmission section 510 generates a transmission signal from transmission data, and transmits the generated transmission signal by radio. Reception section 520 receives various types of signals by radio, and acquires a higher layer signal from the received physical layer signal. Further, reception section 520 has a function of receiving an NR-PSS, NR-SSS, NR-PBCH, DL/UL/SL control signal, etc. transmitted from base station 20. As D2D communication, for example, transmission section 510 transmits a physical sidelink control channel (PSCCH), physical sidelink shared channel (PSSCH), physical sidelink discovery channel (PSDCH), physical sidelink broadcast channel (PSBCH), etc. to another terminal 10, and reception section 520 receives a PSCCH, PSSCH, PSDCH, PSBCH, etc. from another terminal 10.

Configuration section 530 stores, in a storage device (storage section), various types of configuration information received from base station 20 by reception section 520, and reads the configuration information from the storage device as needed. Configuration section 530 also stores preconfigured information configured in advance in the storage device. Contents of the configuration information and preconfigured information may include, for example, information related to a PDU session and the like. Note that configuration section 530 may be included in control section 540.

Control section 540 controls the entire terminal 10. In particular, control section 540 performs control over communication by a PDU session or the like, as described in the above examples. A functional part for signal transmission in control section 540 may be included in transmission section 510, and a functional part for signal reception in control section 540 may be included in reception section 520.

### <Base Station 20>

FIG. 7 illustrates an exemplary functional configuration of base station 20 according to an embodiment of the present disclosure. As illustrated in FIG. 7, base station 20 includes transmission section 610, reception section 620, configuration section 630, and control section 640. The functional configuration illustrated in FIG. 7 is merely an example. Any names may be used for the function categories and function sections as long as they are capable of performing an operation according to an embodiment of the present disclosure.

Transmission section 610 includes a function of generating a signal to be transmitted to terminal 10 and transmitting the generated signal by radio. In addition, transmission section 610 transmits an inter-network node message to another network node. Transmission section 610 also transmits, to DH 50, user data transmitted by terminal 10 as needed. Reception section 620 includes a function of receiving various types of signals transmitted from terminal 10 and acquiring, for example, higher layer information from the received signals. Transmission section 610 also has a function of transmitting an NRPSS, NR-SSS, NR-PBCH, DL/UL control signal, etc. to terminal 10. Reception section 620 receives an inter-network node message from another network node.

Configuration section 630 stores, in a storage device (storage section), preconfigured information configured in advance and various types of configuration information to be transmitted to terminal 10, and reads the preconfigured information and configuration information from the storage device as needed. Contents of the preconfigured information and configuration information may include, for example, node connection information, information related to a PDU session, and the like. Note that configuration section 630 may be included in control section 640.

Control section 640 controls the entire base station 20. In particular, control section 640 performs control over communication by a PDU session or the like (especially, transmission, to DH 50, of user data transmitted from terminal 10, based on an indication from another network node). Control section 640 also controls communication with terminal 10 based on a UE capability report on a radio parameter received from terminal 10. A functional part for signal transmission in control section 640 may be included in transmission section 610, and a functional part for signal reception in control section 640 may be included in reception section 620.

### <Access Mobility Management Apparatus 30-1>

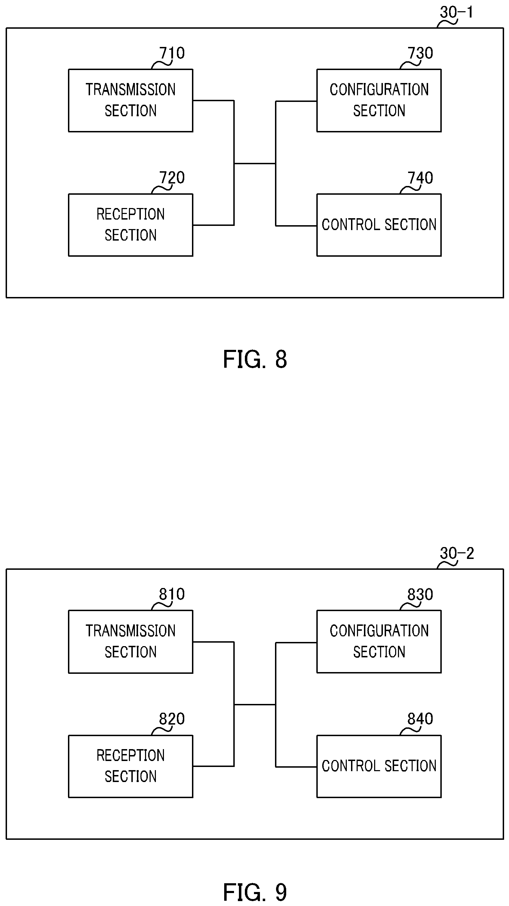

FIG. 8 illustrates an exemplary functional configuration of access mobility management apparatus 30-1 according to an embodiment of the present disclosure. As illustrated in FIG. 8, access mobility management apparatus 30-1 includes transmission section 710, reception section 720, configuration section 730, and control section 740. The functional configuration illustrated in FIG. 8 is merely an example. Any names may be used for the function categories and function sections as long as they are capable of performing an operation according to an embodiment of the present disclosure.

Transmission section 710 includes a function of generating a signal to be transmitted, and transmitting the generated signal to a network. Reception section 720 includes a function of receiving various types of signals, and acquiring, for example, higher layer information from the received signals.

Configuration section 730 stores, in a storage device (storage section), preconfigured information configured in advance and configuration information, and reads the preconfigured information and configuration information from the storage device as needed. Contents of the preconfigured information and configuration information may include, for example, node connection information, information of S-NSSAI supported by session management apparatus 30-2, etc. Note that configuration section 730 may be included in control section 740.

Control section 740 controls the entire access mobility management apparatus 30-1. In particular, control section 640 performs control over communication by a PDU session or the like (especially, transmission (indication) of a parameter, instruction, etc. for transmitting user data to DH 50) as described in the above examples. A functional part for signal transmission in control section 740 may be included in transmission section 710, and a functional part for signal reception in control section 740 may be included in reception section 720.

### <Session Management Apparatus 30-2>

FIG. 9 illustrates an exemplary functional configuration of session management apparatus 30-2 according to an embodiment of the present disclosure. As illustrated in FIG. 9, session management apparatus 30-2 includes transmission section 810, reception section 820, configuration section 830, and control section 840. The functional configuration illustrated in the drawing is merely an example. Any names may be used for the function categories and function sections as long as they are capable of performing an operation according to an embodiment of the present disclosure.

Transmission section 810 includes a function of generating a signal to be transmitted, and transmitting the generated signal to a network. Reception section 820 includes a function of receiving various types of signals, and acquiring, for example, higher layer information from the received signals.

Configuration section 830 stores, in a storage device (storage section), preconfigured information configured in advance and various types of configuration information to be transmitted to terminal 10, and reads the preconfigured information and configuration information from the storage device as needed. Contents of the preconfigured information and configuration information may include, for example, node connection information, information of S-NSSAI supported by session management apparatus 30-2, etc. Note that configuration section 830 may be included in control section 840.

Control section 840 controls the entire session management apparatus 30-2. In particular, control section 840 performs control over communication by a PDU session or the like (especially, transmission (indication) of a parameter, instruction, etc. for transmitting user data to DH 50) as described in the above examples. A functional part for signal transmission in control section 840 may be included in transmission section 810, and a functional part for signal reception in control section 840 may be included in reception section 820.

### <User Plane Apparatus 40>

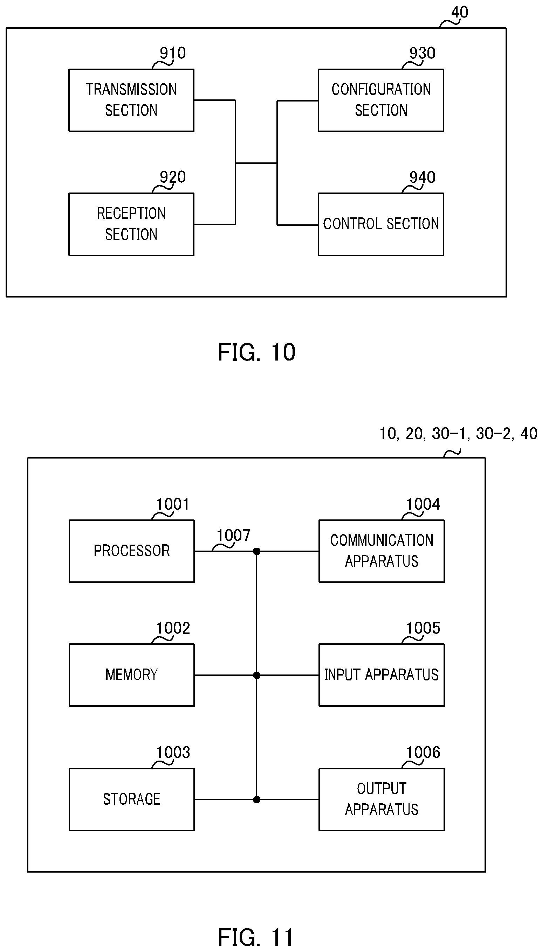

FIG. 10 illustrates an exemplary functional configuration of user plane apparatus 40 according to an embodiment of the present disclosure. As illustrated in FIG. 10, user plane apparatus 40 includes transmission section 910, reception section 920, configuration section 930, and control section 940. The functional configuration illustrated in FIG. 10 is merely an example. Any names may be used for the function categories and function sections as long as they are capable of performing an operation according to an embodiment of the present disclosure.

Transmission section 910 includes a function of generating a signal to be transmitted, and transmitting the generated signal to a network. Transmission section 910 transmits user data transmitted from terminal 10 to DH 50 via an internal interface as needed. Reception section 920 includes a function of receiving various types of signals, and acquiring, for example, higher layer information from the received signals.

Configuration section 930 stores configuration information in a storage device (storage section), and reads the configuration information from the storage device as needed. Contents of the configuration information may include, for example, information identifying a network slice operated by user plane apparatus 40, information of a resource corresponding to a network slice, etc. Note that configuration section 930 may be included in control section 940.

Control section 940 controls the entire user plane apparatus 40. In particular, control section 940 performs control over communication by a PDU session or the like (especially, transmission, to DH 50, of user data transmitted from terminal 10, based on an indication from another network node) as described in the above examples. A functional part for signal transmission in control section 940 may be included in transmission section 910, and a functional part for signal reception in control section 940 may be included in reception section 920.

### (Effect of Embodiment)

As described above, the above embodiment makes it possible to more securely transmit and aggregate user data transmitted from UE 10 by placing DH 50 for user data between NG-RAN 20 and UPF 40 and connecting to DH 50 via a gNB-CU-UP or UPF 40 that is a network node close to a network edge.

Meanwhile, even in a case where a data hub is introduced as described above, it is inefficient to configure a U-plane path every time small data is collected from UE 10. According to the above Example 1 and Example 3, user data is transmitted to and aggregated in DH 50 without configuring UPF 40, i.e., U-plane path, thereby more efficiently transmitting and aggregating user data transmitted from UE 10.

In addition, even in a case where a data hub is introduced as described above, it is inefficient to configure a data radio bearer (DRB) every time small data is collected from UE 10. According to the above Example 3 and Example 4, user data is transmitted to and aggregated in DH 50 without configuring the DRB, thereby more efficiently transmitting and aggregating user data transmitted from UE 10.

Further, an NWDAF (e.g., NWDAF 30-10 illustrated in FIG. 1) collecting and analyzing data acquired by a network is specified for a C-plane, for example (e.g., NPLs 1 to 3). Such an NWDAF can easily access DH 50 placed as described above to use data aggregated in the data hub for AI and machine learning (ML), for example.

### (Hardware Configuration)

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

For example, the base station, the terminal, and the like according to an embodiment of the present disclosure may function as a computer that executes processing of a wireless communication method of the present disclosure. FIG. 11 illustrates an exemplary hardware configuration of the terminal, the base station, the access mobility management apparatus, the session management apparatus, and the user plane apparatus according to one embodiment of the present disclosure. Physically, terminal 10, base station 20, access mobility management apparatus 30-1, session management apparatus 30-2, and user plane apparatus 40 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of terminal 10, base station 20, access mobility management apparatus 30-1, session management apparatus 30-2, and user plane apparatus 40 may include one apparatus or a plurality of apparatuses illustrated in the drawings or may not include part of the apparatuses.

The functions of terminal 10, base station 20, access mobility management apparatus 30-1, session management apparatus 30-2, and user plane apparatus 40 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 540, control section 640, control section 740, control section 840, control section 940, and the like as described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 540 of terminal 10, control section 640 of base station 20, control section 740 of access mobility management apparatus 30-1, control section 840 of session management apparatus 30-2, or control section 940 of user plane apparatus 40 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 510, reception section 520, transmission section 610, reception section 620, transmission section 710, reception section 720, transmission section 810, reception section 820, transmission section 910, reception section 920 and the like as described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) that makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, terminal 10, base station 20, access mobility management apparatus 30-1, session management apparatus 30-2, and user plane apparatus 40 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### (Notification of Information and Signaling)

The notification of information is not limited to the aspects/embodiments described in the present disclosure, and the information may be notified by another method. For example, the notification of information may be performed out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### (Application System)

The aspects/embodiments described in the present specification may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and the like)

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a user terminal in a network constituted by one network node or a plurality of network nodes including a base station can be obviously performed by at least one of the base station and a network node other than the base station (examples include, but not limited to, MME or S-GW). Although there is one network node in addition to the base station in the case illustrated above, a plurality of other network nodes may be combined (for example, MME and S-GW).

### (Direction of Input and Output)

The information and the like (see "Information and Signals") can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted.

The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### (Base Station (Radio Base Station))

The terms "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)", "user terminal", "User Equipment (UE)", and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the aspects/embodiments of the present disclosure may find application in a configuration that results from replacing communication between the base station and the user terminal with communication between multiple user terminals (such communication may, for example, be referred to as device-to-device (D2D), vehicle-to-everything (V2X), or the like). In this case, terminal 10 may be configured to have the functions that base station 20 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 20 is configured to have the functions that terminal 10 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming", "expecting", "considering", and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

### (Reference Signal)

The reference signal can also be abbreviated as an RS and may also be called as a pilot depending on the applied standard.

### (Meaning of "Based on")

The description "based on" used in the present disclosure does not mean "based only on", unless otherwise specified. In other words, the description "based on" means both of "based only on" and "based at least on".

### ("First" and "Second")

Any reference to elements by using the terms "first", "second", and the like used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### (Means)

The "section" in the configuration of each apparatus may be replaced with "means", "circuit", "device", or the like.

### (Open Form)

In a case where terms "include", "including", and their modifications are used in the present disclosure, these terms are intended to be inclusive like the term "comprising". Further, the term "or" used in the present disclosure is not intended to be an exclusive "or".

### (Time Unit such as TTI, Frequency Unit such as RB, and Radio Frame Configuration)

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell", "carrier", and the like in the present disclosure may be replaced with "BWP".

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a", "an", and "the" in English, for example, are added in the present disclosure by translation, nouns following these articles may have the same meaning as used in the plural.

In the present disclosure, the expression "A and B are different" may mean that "A and B are different from each other". Note that, the expression may also mean that "A and B are different from C". The expressions "separated" and "coupled" may also be interpreted in the same manner as the expression "A and B are different".

### (Variations and the like of Aspects)

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

An exemplary aspect of the present disclosure is useful for mobile communication systems.

### Reference Signs List

10 UE (Terminal)
20 NG-RAN (gNB, Base station)
30-1 AMF (Access mobility management apparatus)
30-2 SMF (Session management apparatus)
40 UPF (User plane apparatus)
50 DH (Data hub)
610, 710, 810, 910 Transmission section
620, 720, 820, 920 Reception section
630, 730, 830, 930 Configuration section
640, 740, 840, 940 Control section

## Claims

1. A network node in a core network where a data hub is placed in a user plane, the network node comprising:
a control section that recognizes that a session of a terminal is for the data hub; and
a transmission section that transmits first information to a user plane portion of an aggregation node in a serving base station of the terminal, the first information indicating that data transmitted from the terminal in the session is transmitted from the user plane portion to the data hub directly connected to the user plane portion.

2. The network node according to Claim 1, wherein,
the control section determines whether the user plane portion is directly connected to the data hub,
when the user plane portion is directly connected to the data hub, the transmission section transmits the first information to the user plane portion, and
when the user plane portion is not directly connected to the data hub, the control section selects a user plane function (UPF) for the data hub and the transmission section transmits, to the UPF, second information indicating that the data transmitted from the terminal in the session is transmitted from the UPF to the data hub.

3. The network node according to Claim 2, wherein, when the user plane portion is not directly connected to the data hub, the transmission section transmits, to the UPF, data transmitted from the terminal together with the second information.

4. The network node according to Claim 1, wherein the control section recognizes that the session is for the data hub based on at least one of slice identification information and/or data network identification information that are transmitted from the terminal.

5. The network node according to Claim 1, wherein the control section recognizes that the session is for the data hub based on session identification information transmitted from the terminal.

6. A communication method performed by a network node in a core network where a data hub is placed in a user plane, the communication method comprising:
recognizing that a session of a terminal is for the data hub; and
transmitting information to a user plane portion of an aggregation node in a serving base station of the terminal, the information indicating that data transmitted from the terminal in the session is transmitted from the user plane portion to the data hub directly connected to the user plane portion.
